# EUROPEAN PATENT SPECIFICATION

(11) **EP 1 507 784 B1**
(45) Date of publication and mention of the grant of the patent: **21.06.2006**
(21) Application number: 03755934.1
(22) Date of filing: 22.05.2003
(51) Int. Cl.: C07F 9/6574

(54) **AMORPHOUS SOLID MODIFICATION OF BIS(2,4-DICUMYLPHENYL) PENTAERYTHRITOL DIPHOSPHITE**
AMORPHE FESTE MODIFIKATION VON BIS(2,4-DICUMYLPHENYL) PENTAERYTHRITDIPHOSPHIT
MODIFICATION SOLIDE AMORPHE DU BIS(2,4-DICUMYLPHENYL)PENTAERYTHRITOL DIPHOSPHITE

(30) Priority: 30.05.2002 EP 02405429
(43) Date of publication of application: 23.02.2005
(73) Proprietor: Ciba Specialty Chemicals Holding Inc., 4057 Basel (CH)
(72) Inventor: THIBAUT, Daniel, F-68730 Blotzheim (FR)
(86) International application number: PCT/EP2003/005371
(87) International publication number: WO 2003/102004

(56) References cited:
- EP-A- 0 816 442
- WO-A-94/17082
- WO-A-95/06651
- US-A- 4 665 211
- US-A- 5 276 076
- US-A1- 2001 023 270
- US-A1- 2002 040 081

## Description

The present invention pertains to an amorphous solid modification of bis(2,4-dicumylphenyl)-pentaerythritol diphosphite, to a process for preparing said modification and the use thereof for stabilizing organic materials against oxidative, thermal or light-induced degradation.

U.S 5,276,076 discloses the preparation of an amorphous solid modification of 2,2',2"-nitrilo-[triethyl-tris(3,3',5,5'-tetra-tert-butyl-1,1'-biphenyl-2,2'-diyl)phosphite] by melting said compound and rapidly cooling the melt.

Bis(2,4-dicumylphenyl)pentaerythritol diphosphite is a compound having the formula I

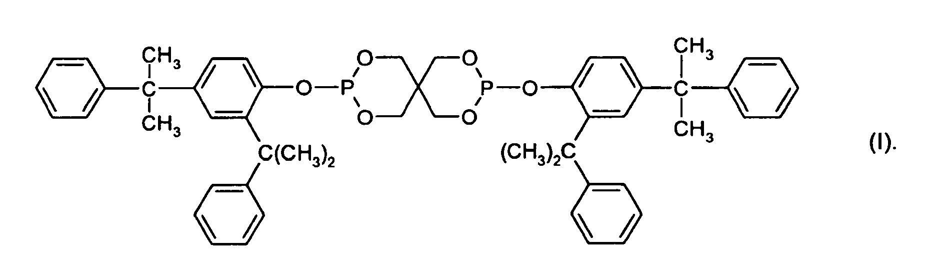

This compound of the formula I is useful as a processing stabilizer for organic materials as taught for example in U.S. Patent 5,364,895; U.S. Patent 5,438,086; US-A-2001/0023270; or US-A-2002/0040081. The compound of the formula I is disclosed as being a crystalline product melting at 230 - 232°C [U.S. Patent 5,438,086, Example 3, column 16, line 14]. The relatively high melting point of the crystalline product form of the compound of the formula I is a problem when stabilizing organic polymers processed at relatively low temperatures such as blow molding of HDPE and processing of natural rubber. The result is that the additive is not uniformly distributed within the organic polymer causing problems in the stabilization performance of the additive stabilizer.

In accordance with the present invention an amorphous form of the compound of formula I is obtained which does not suffer the problems associated with the higher melting product reported previously. This new amorphous form is characterized by a glass transition temperature (T_{g}) within the range of from 59 - 63°C and by an X-ray diffraction pattern which is featureless.

The instant invention also relates to a process for the preparation of the amorphous solid form of bis(2,4-dicumylphenyl)pentaerythritol diphosphite of the formula I, which comprises melting said compound and rapidly cooling the melt.

The preferred method consists of pouring, preferably dropping, the molten material onto a cool surface maintained below 30°C, more preferably near 20°C. Preferably, the cool surface is a metal surface, for example a metal surface present in a Sandvik Rotoformer® . The molten material can also be sprayed, preferably via nozzles, with a cooled gas onto a cool surface to form amorphous spherical granules. The temperature of the cooled gas is preferably below 30°C. Preferably, a melt distribution device is used to form uniform pellets if form giving is achieved from the melt. The amorphous solid thus obtained may be further ground or granulated into any desired particle size by conventional means.

The instant invention relates also to the amorphous solid form of bis(2,4-dicumylphenyl)pentaerythritol diphosphite, characterized by melting in the range of from 59 - 63°C and by an X-ray diffraction pattern which is featureless, obtainable by melting said compound and rapidly cooling the melt.

The amorphous solid according to the invention is highly suitable for stabilizing organic materials against oxidative, thermal or light-induced degradation.

Examples of such organic materials are:
1. Polymers of monoolefins and diolefins, for example polypropylene, polyisobutylene, polybut-1-ene, poly-4-methylpent-l-ene, polyvinylcyclohexane, polyisoprene or polybutadiene, as well as polymers of cycloolefins, for instance of cyclopentene or norbornene, polyethylene (which optionally can be crosslinked), for example high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), (VLDPE) and (ULDPE).
   Polyolefins, i.e. the polymers of monoolefins exemplified in the preceding paragraph, preferably polyethylene and polypropylene, can be prepared by different, and especially by the following, methods:
   a) radical polymerisation (normally under high pressure and at elevated temperature).
   b) catalytic polymerisation using a catalyst that normally contains one or more than one metal of groups IVb, Vb, VIb or VIII of the Periodic Table. These metals usually have one or more than one ligand, typically oxides, halides, alcoholates, esters, ethers, amines, alkyls, alkenyls and/or aryls that may be either π- or σ-coordinated. These metal complexes may be in the free form or fixed on substrates, typically on activated magnesium chloride, titanium(III) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups la, IIa and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, ethylene/vinylcyclohexane copolymers, ethylene%ycloolefin copolymers (e.g. ethylene/norbornene like COC), ethylene/1-olefins copolymers, where the 1-olefin is generated in-situ; propylene/butadiene copolymers, isobutylene/isoprene copolymers, ethylene/vinylcyclohexene copolymers, ethylene/alkyl acrylate copolymers, ethylene/alkyl methacrylate copolymers, ethylene/vinyl acetate copolymers or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethylene-acrylic acid copolymers (EAA), LLDPE/EVA, LLDPE/EAA and alternating or random polyalkylene/carbon monoxide copolymers and mixtures thereof with other polymers, for example polyamides.
4. Hydrocarbon resins (for example C₅-C₉) including hydrogenated modifications thereof (e.g. tackifiers) and mixtures of polyalkylenes and starch.
   Homopolymers and copolymers from 1.) - 4.) may have any stereostructure including syndiotactic, isotactic, hemi-isotactic or atactic; where atactic polymers are preferred. Stereoblock polymers are also included.
5. Polystyrene, poly(p-methylstyrene), poly(α-methylstyrene).
6. Aromatic homopolymers and copolymers derived from vinyl aromatic monomers including styrene, α-methylstyrene, all isomers of vinyl toluene, especially p-vinyltoluene, all isomers of ethyl styrene, propyl styrene, vinyl biphenyl, vinyl naphthalene, and vinyl anthracene, and mixtures thereof. Homopolymers and copolymers may have any stereostructure including syndiotactic, isotactic, hemi-isotactic or atactic; where atactic polymers are preferred. Stereoblock polymers are also included.
   6a. Copolymers including aforementioned vinyl aromatic monomers and comonomers selected from ethylene, propylene, dienes, nitriles, acids, maleic anhydrides, maleimides, vinyl acetate and vinyl chloride or acrylic derivatives and mixtures thereof, for example styrene/butadiene, styrene/acrylonitrile, styrene/ethylene (interpolymers), styrene/alkyl methacrylate, styrene/butadiene/alkyl acrylate, styrene/butadiene/alkyl methacrylate, styrene/maleic anhydride, styrene/acrylonitrile/methyl acrylate; mixtures of high impact strength of styrene copolymers and another polymer, for example a polyacrylate, a diene polymer or an ethylene/propylene/diene terpolymer; and block copolymers of styrene such as styrene/butadiene/styrene, styrene/isoprene/styrene, styrene/ethylene/butylene/styrene or styrene/ethylene/propylene/styrene.
   6b. Hydrogenated aromatic polymers derived from hydrogenation of polymers mentioned under 6.), especially including polycyclohexylethylene (PCHE) prepared by hydrogenating atactic polystyrene, often referred to as polyvinylcyclohexane (PVCH).
   6c. Hydrogenated aromatic polymers derived from hydrogenation of polymers mentioned under 6a.).

   Homopolymers and copolymers may have any stereostructure including syndiotactic, isotactic, hemi-isotactic or atactic; where atactic polymers are preferred. Stereoblock polymers are also included.
7. Graft copolymers of vinyl aromatic monomers such as styrene or α-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/butadiene copolymers, as well as mixtures thereof with the copolymers listed under 6), for example the copolymer mixtures known as ABS, MBS, ASA or AES polymers.
8. Halogen-containing polymers such as polychloroprene, chlorinated rubbers, chlorinated and brominated copolymer of isobutylene-isoprene (halobutyl rubber), chlorinated or sulfochlorinated polyethylene, copolymers of ethylene and chlorinated ethylene, epichlorohydrin homo- and copolymers, especially polymers of halogen-containing vinyl compounds, for example polyvinyl chloride, polyvinylidene chloride, polyvinyl fluoride, polyvinylidene fluoride, as well as copolymers thereof such as vinyl chloride/vinylidene chloride, vinyl chloride/vinyl acetate or vinylidene chloride/vinyl acetate copolymers.
9. Polymers derived from α,β-unsaturated acids and derivatives thereof such as polyacrylates and polymethacrylates; polymethyl methacrylates, polyacrylamides and polyacrylonitriles, impact-modified with butyl acrylate.
10. Copolymers of the monomers mentioned under 9) with each other or with other unsaturated monomers, for example acrylonitrile/ butadiene copolymers, acrylonitrile/alkyl acrylate copolymers, acrylonitrile/alkoxyalkyl acrylate or acrylonitrile/vinyl halide copolymers or acrylonitrile/ alkyl methacrylate/butadiene terpolymers.
11. Polymers derived from unsaturated alcohols and amines or the acyl derivatives or acetals thereof, for example polyvinyl alcohol, polyvinyl acetate, polyvinyl stearate, polyvinyl benzoate, polyvinyl maleate, polyvinyl butyral, polyallyl phthalate or polyallyl melamine; as well as their copolymers with olefins mentioned in 1) above.
12. Homopolymers and copolymers of cyclic ethers such as polyalkylene glycols, polyethylene oxide, polypropylene oxide or copolymers thereof with bisglycidyl ethers.
13. Polyacetals such as polyoxymethylene and those polyoxymethylenes which contain ethylene oxide as a comonomer; polyacetals modified with thermoplastic polyurethanes, acrylates or MBS.
14. Polyphenylene oxides and sulfides, and mixtures of polyphenylene oxides with styrene polymers or polyamides.
15. Polyurethanes derived from hydroxyl-terminated polyethers, polyesters or polybutadienes on the one hand and aliphatic or aromatic polyisocyanates on the other, as well as precursors thereof.
16. Polyamides and copolyamides derived from diamines and dicarboxylic acids and/or from aminocarboxylic acids or the corresponding lactams, for example polyamide 4, polyamide 6, polyamide 6/6, 6/10, 6/9, 6/12, 4/6, 12/12, polyamide 11, polyamide 12, aromatic polyamides starting from m-xylene diamine and adipic acid; polyamides prepared from hexamethylenediamine and isophthalic or/and terephthalic acid and with or without an elastomer as modifier, for example poly-2,4,4,-trimethylhexamethylene terephthalamide or poly-m-phenylene isophthalamide; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).
17. Polyureas, polyimides, polyamide-imides, polyetherimids, polyesterimids, polyhydantoins and polybenzimidazoles.
18. Polyesters derived from dicarboxylic acids and diols and/or from hydroxycarboxylic acids or the corresponding lactones, for example polyethylene terephthalate, polybutylene terephthalate, poly-1,4-dimethylolcyclohexane terephthalate, polyalkylene naphthalate (PAN) and polyhydroxybenzoates, as well as block copolyether esters derived from hydroxyl-terminated polyethers; and also polyesters modified with polycarbonates or MBS.
19. Polycarbonates and polyester carbonates.
20. Polyketones.
21. Polysulfones, polyether sulfones and polyether ketones.
22. Crosslinked polymers derived from aldehydes on the one hand and phenols, ureas and melamines on the other hand, such as phenol/formaldehyde resins, urea/formaldehyde resins and melamine/formaldehyde resins.
23. Drying and non-drying alkyd resins.
24. Unsaturated polyester resins derived from copolyesters of saturated and unsaturated dicarboxylic acids with polyhydric alcohols and vinyl compounds as crosslinking agents, and also halogen-containing modifications thereof of low flammability.
25. Crosslinkable acrylic resins derived from substituted acrylates, for example epoxy acrylates, urethane acrylates or polyester acrylates.
26. Alkyd resins, polyester resins and acrylate resins crosslinked with melamine resins, urea resins, isocyanates, isocyanurates, polyisocyanates or epoxy resins.
27. Crosslinked epoxy resins derived from aliphatic, cycloaliphatic, heterocyclic or aromatic glycidyl compounds, e.g. products of diglycidyl ethers of bisphenol A and bisphenol F, which are crosslinked with customary hardeners such as anhydrides or amines, with or without accelerators.
28. Natural polymers such as cellulose, rubber, gelatin and chemically modified homologous derivatives thereof, for example cellulose acetates, cellulose propionates and cellulose butyrates, or the cellulose ethers such as methyl cellulose; as well as rosins and their derivatives.
29. Blends of the aforementioned polymers (polyblends), for example PP/EPDM, Polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE, PA/PP, PA/PPO, PBT/PC/ABS or PBT/PET/PC.
30. Naturally occurring and synthetic organic materials which are pure monomeric compounds or mixtures of such compounds, for example mineral oils, animal and vegetable fats, oil and waxes, or oils, fats and waxes based on synthetic esters (e.g. phthalates, adipates, phosphates or trimellitates) and also mixtures of synthetic esters with mineral oils in any weight ratios, typically those used as spinning compositions, as well as aqueous emulsions of such materials.
31. Aqueous emulsions of natural or synthetic rubber, e.g. natural latex or latices of carboxylated styrene/butadiene copolymers.

Accordingly, the invention also relates to composition comprising (a) an organic material subjected to oxidative, thermal or light-induced degradation, and (b) the amorphous solid form of bis(2,4-dicumylphenyl)pentaerythritol diphosphite.

Preferably, the organic materials to be protected are natural, semi-synthetic or synthetic polymers. Particular preference is given to thermoplastic polymers, in particular polyolefins, especially polyethylene and polypropylene.

The action of the compound according to the invention against thermal and oxidative degradation, especially under thermal stress, such as occurs during processing of thermoplastics, may be mentioned in particular. Accordingly, the amorphous solid form of bis(2,4-dicumylphenyl)pentaerythritol diphosphite is highly suitable for use as processing stabilizer.

Preferably, the amorphous solid form of bis(2,4-dicumylphenyl)pentaerythritol diphosphite according to the invention is added to the material to be stabilized in amounts of 0.01 to 10%, for example 0.01 to 5%, preferably 0.05 to 3%, in particular 0.05 to 1%, relative to the weight of the organic material to be stabilized.

The compositions according to the invention can contain, in addition to the amorphous solid form of bis(2,4-dicumylphenyl)pentaerythritol diphosphite, further additives, for example the following:
1. Antioxidants
   1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which are linear or branched in the side chains, for example 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol and mixtures thereof.
   1.2. Alkylthiomethylphenols, for example 2,4-dioctylthiomethyl-6-tert-butylphenol, 2,4-dioctylthiomethyl-6-methylphenol, 2,4-dioctylthiomethyl-6-ethylphenol, 2,6-di-dodecylthiomethyl-4-nonylphenol.
   1.3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis(3,5-di-tert-butyl-4-hydroxyphenyl) adipate.
   1.4. Tocopherols, for example α-tocopherol, β-tocopherol, γ-tocopherol, δ-tocopherol and mixtures thereof (vitamin E).
   1.5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol), 4,4'-bis(2,6-dimethyl-4-hydroxyphenyl)-disulfide.
   1.6. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)-phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis(3,5-di-tert-butyl-4-hydroxyphenyl)propane, 2,2-bis-(5-tert-butyl-4-hydroxy2-methylphenyl)-4-n-dodecylmercaptobutane, 1,1,5,5-tetra(5-tert-butyl-4-hydroxy-2-methylphenyl)pentane.
   1.7. 0-. N- and S-benzyl compounds, for example 3,5,3',5'-tetra-tert-butyl-4,4'-dihydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide, isooctyl-3,5-di-tert-butyl-4-hydroxybenzylmercaptoacetate.
   1.8. Hvdroxvbenzvlated malonates, for example dioctadecyl-2,2-bis(3,5-di-tert-butyl-2-hydroxybenzyl)malonate, di-octadecyl-2-(3-tert-butyl-4-hydroxy-5-methylbenzyl)malonate, didodecyfmercaptoethyl-2,2-bis(3,5-di-tert-butyl-4-hydroxybenzyl)malonate, bis[4-(1,1,3,3-tetramethylbutyl)phenyl]-2,2-bis(3,5-di-tert-butyl-4-hydroxybenzyl)malonate.
   1.9. Aromatic hydroxybenzyl compounds, for example 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.
   1.10. Triazine compounds, for example 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris-(3,5-di-tert-butyl-4-hydroxyphenoxy)-1,2,3-triazine, 1,3,5-tris(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris-(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)isocyanurate.
   1.11. Benzylphosphonates, for example dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid.
   1.12. Acylaminophenols, for example 4-hydroxylauranilide, 4-hydroxystearanilide, octyl N-(3,5-di-tert-butyl-4-hydroxyphenyl)carbamate.
   1.13. Esters of β-(3,5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.14. Esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis-(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane; 3,9-bis[2-{3-(3-tert-butyl-4-hydroxy-5-methylphenyl)propionyloxy}-1,1-dimethylethyl]-2,4,8,10-tetraoxaspiro[5.5]-undecane.
   1.15. Esters of β-(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.16. Esters of 3.5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.17. Amides of β-(3,5-di-tert-butyl-4-hydroxyphenyl)propionic acid e.g. N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)hydrazide, N,N'-bis[2-(3-[3,5-di-tert-butyl-4-hydroxyphenyl]propionyloxy)ethyl]oxamide (Naugard® XL-1, supplied by Uniroyal).
   1.18. Ascorbic acid (vitamin C)
   1.19. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butyl-aminophenol, 4-butyrylaminophenol, 4-nonanoylaminophenol, 4-dodecanoylaminophenol, 4-octadecanoylaminophenol, bis(4-methoxyphenyl)amine, 2,6-di-tert-butyl-4-dimethylaminomethylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)propane, (o-tolyl)biguanide, bis[4-(1',3'-dimethylbutyl)phenyl]amine, tert-octylated N-phenyl-1-naphthylamine, a mixture of mono- and dialkylated tert-butyl/tert-octyldiphenylamines, a mixture of mono- and dialkylated nonyldiphenylamines, a mixture of mono- and dialkylated dodecyldiphenylamines, a mixture of mono- and dialkylated isopropyl/isohexyldiphenylamines, a mixture of mono- and dialkylated tert-butyldiphenylamines, 2,3-dihydro-3,3-dimethyl-4H-1,4-benzothiazine, phenothiazine, a mixture of mono- and dialkylated tert-butyl/tert-octylphenothiazines, a mixture of mono- and dialkylated tert-octylphenothiazines, N-allylphenothiazine, N,N,N',N'-tetraphenyl-1,4-diaminobut-2-ene.
2. UV absorbers and light stabilizers
   2.1. 2-(2'-Hydroxyphenynbenzotriazoles, for example 2-(2'-hydroxy-5'-methylphenyl)benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chlorobenzotriazole, 2-(3'-tert-butyt-2'-hydroxy-5'-methylphenyl)-5-chlorobenzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis(α,α-dimethylbenryl)-2'-hydroxyphenyl)benzotriazole, 2-(3'-tert-butyl-2'-hydroxy-5'-(2-octyloxycarbonylethyl)phenyl)-5-chlorobenzotriazole, 2-(3'-tert-butyl-5'-[2-(2-ethylhexyloxy)carbonylethyl]-2'-hydroxyphenyl)-5-chlorobenzotriazole, 2-(3'-tert-butyl-2'-hydroxy-5'-(2-methoxycarbonylethyl)phenyl)-5-chlorobenzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylenebis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; 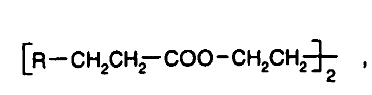 where R = 3'-tert-butyl-4'-hydroxy-5'-2H-benzotriazol-2-ylphenyl, 2-[2'-hydroxy-3'-(α,α-dimethylbenzyl)-5'-(1,1,3,3-tetramethylbutyl)phenyl]-benzotriazole; 2-[2'-hydroxy-3'-(1,1,3,3-tetramethylbutyl)-5'-(α,α-dimethylbenzyl)phenyl]benzotriazole.
   2.2. 2-Hydroxvbenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.
   2.3. Esters of substituted and unsubstituted benzoic acids, for example 4-tert-butylphenyl salicylate, phenyl salicylate, octylphenyl salicylate, dibenzoyl resorcinol, bis(4-tert-butylbenzoyl)resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.
   2.4. Acrylates, for example ethyl α-cyano-β,β-diphenylacrylate, isooctyl α-cyano-β,β-diphenylacrylate, methyl α-carbomethoxycinnamate, methyl α-cyano-β-methyl-p-methoxycinnamate, butyl α-cyano-β-methyl-p-methoxycinnamate, methyl α-carbomethoxy-p-methoxycinnamate and N-(β-carbomethoxy-β-cyanovinyl)-2-methylindoline.
   2.5. Nickel compounds, for example nickel complexes of 2,2'-thiobis[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphenylundecylketoxime, nickel complexes of 1-phenyl-4-lauroyl-5-hydroxypyrazole, with or without additional ligands.
   2.6. Sterically hindered amines, for example bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1 -octy)oxy-2,2.6,6-tetramethy)-4-piperidy))sebacate. bis(1.2,2.6,6-pentamethy)-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butanetetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)-malonate, 3-n-octyl-7,7,9,9-tetramethyl-1,3,8-triazaspiro[4.5]decane-2,4-dione, bis(1-octyloxy-2,2,6,6-tetramethylpiperidyl)sebacate, bis(1-octyloxy-2,2,6,6-tetramethylpiperidyl)succinate, linear or cyclic condensates of N,N'-bis(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl)-1,3,5-triazine and 1,2-bis(3-aminopropylamino)-ethane, the condensate of 2-chloro-4,6-di-(4-n-butylamino-1,2,2,6,6-pentamethylpiperidyl)-1,3,5-triazine and 1,2-bis(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidine-2,5-dione, 3-dodecy)-1 -(1,2,2.6.6-pentamethy)-4-piper)dy))pyrrolidine-2,5-dione, a mixture of 4-hexadecyloxy- and 4-stearyloxy-2,2,6,6-tetramethylpiperidine, a condensate of N,N'-bis(2,2,6,6-tetramethyl-4-piperidyl)hexamethylenediamine and 4-cyclohexylamino-2,6-dichloro-1,3,5-triazine, a condensate of 1,2-bis(3-aminopropylamino)ethane and 2,4,6-trichloro-1,3,5-triazine as well as 4-butylamino-2,2,6,6-tetramethylpiperidine (CAS Reg. No. [136504-96-6]); a condensate of 1,6-hexanediamine and 2,4,6-trichtoro-l ,3,5-triazine as well as N,N-dibutylamine and 4-butylamino-2,2,6,6-tetramethylpiperidine (CAS Reg. No. [192268-64-7]); N-(2,2,6,6-tetramethyl-4-piperidyl)-n-dodecylsuccinimide, N-(1,2,2,6,6-pentamethyl-4-piperidyl)-n-dodecylsuccinimide, 2-undecyl-7,7,9,9-tetramethyl-1-oxa-3,8-diaza-4-oxo-spiro[4,5]decane, a reaction product of 7,7,9,9-tetramethyl-2-cycloundecyl-1-oxa-3,8-diaza-4-oxospiro-[4,5]decane and epichlorohydrin, 1,1-bis(1,2,2,6,6-pentamethyl-4-piperidyloxycarbonyl)-2-(4-methoxyphenyl)ethene, N,N'-bis-formyl-N,N'-bis(2,2,6,6-tetramethyl-4-piperidyl)hexamethylenediamine, a diester of 4-methoxymethylenemalonic acid with 1,2,2,6,6-pentamethyl-4-hydroxypiperidine, poly[methylpropyl-3-oxy-4-(2,2,6,6-tetramethyl-4-piperidyl)]siloxane, a reaction product of maleic acid anhydride-α-olefin copolymer with 2,2,6,6-tetramethyl-4-aminopiperidine or 1,2,2,6,6-pentamethyl-4-aminopiperidine.
   2.7. Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.
   2.8. 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethyl)-1,3,5-triazine, 2-[2-hydroxy-4-(2-hydroxy-3-octyloxypropyloxy)phenyl]-4,6-bis(2,4-dimethyl)-1,3,5-triazine, 2-[4-(dodecyloxy/tridecyloxy-2-hydroxypropoxy)-2-hydroxyphenyl]-4,6-bis(2,4-dimethylphenyl)-1,3,5-triazine, 2-[2-hydroxy-4-(2-hydroxy-3-dodecyloxypropoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxypropoxy)phenyl]-1,3,5-triazine, 2-(2-hydroxyphenyl)-4-(4-methoxyphenyl)-6-phenyl-1,3,5-triazine, 2-{2-hydroxy-4-[3-(2-ethylhexyl-1-oxy)-2-hydroxypropyloxy]phenyl}-4,6-bis(2,4-dimethylphenyl)-1,3,5-triazine.
3. Metal deactivators, for example N,N'-diphenyloxamide, N-salicylal-N'-salicyloyl hydrazine, N,N'-bis(salicyloyl)hydrazine, N,N'-bis(3,5-di-tert-butyl-4-hydroxyphenylpropionyl)hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)thiopropionyl dihydrazide.
4. Phosphites and phosphonites, for example triphenyl phosphite, diphenylalkyl phosphites, phenyldialkyl phosphites, tris(nonylphenyl) phosphite, trilauryl phosphite, trioctadecyl phosphite, distearylpentaerythritol diphosphite, tris(2,4-di-tert-butylphenyl) phosphite, diisodecyl pentaerythritol diphosphite, bis(2,4-di-tert-butylphenyl)pentaerythritol diphosphite, bis(2,6-di-tert-butyl-4-methylphenyl)pentaerythritol diphosphite, diisodecyloxypentaerythritol diphosphite, bis(2,4-di-tert-butyl-6-methylphenyl)pentaerythritol diphosphite, bis(2,4,6-tris(tert-butylphenyl)pentaerythritol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz-[d,g]-1,3,2-dioxaphosphocin, bis(2,4-di-tert-butyl-6-methylphenyl)methyl phosphite, bis(2,4-di-tert-butyl-6-methylphenyl)ethyl phosphite, 6-fluoro-2,4,8,10-tetra-tert-butyl-12-methyl-dibenz[d,g]-1,3,2-dioxaphosphocin, 2,2',2"-nitrilo[triethyltris(3,3'.5,5'-tetra-tert-butyl-1,1'-biphenyl-2,2'-diyl)phosphite], 2-ethylhexyl(3,3',5,5'-tetra-tert-butyl-1,1'-biphenyl-2,2'-diyl)phosphite, 5-butyl-5-ethyl-2-(2,4,6-tri-tert-butylphenoxy)-1,3,2-dioxaphosphirane.
5. Hydroxylamines, for example N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.
6. Nitrones, for example N-benzyl-alpha-phenylnitrone, N-ethyl-alpha-methylnitrone, N-octyl-alpha-heptylnitrone, N-lauryl-alpha-undecylnitrone, N-tetradecyl-alpha-tridecylnitrone, N-hexadecyl-alpha-pentadecylnitrone, N-octadecyl-alpha-heptadecylnitrone, N-hexadecyl-alpha-heptadecylnitrone, N-ocatadecyl-alpha-pentadecylnitrone, N-heptadecyl-alpha-heptadecylnitrone, N-octadecyl-alpha-hexadecylnitrone, nitrone derived from N,N-dialkylhydroxylamine derived from hydrogenated tallow amine.
7. Thiosynergists, for example dilauryl thiodipropionate or distearyl thiodipropionate.
8. Peroxide scaven4ers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.
9. Polyamide stabilisers, for example copper salts in combination with iodides and/or phosphorus compounds and salts of divalent manganese.
10. Basic co-stabilisers, for example melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids, for example calcium stearate, zinc stearate, magnesium behenate, magnesium stearate, sodium ricinoleate and potassium palmitate, antimony pyrocatecholate or zinc pyrocatecholate.
11. Nucleating agents, for example inorganic substances, such as talcum, metal oxides, such as titanium dioxide or magnesium oxide, phosphates, carbonates or sulfates of, preferably, alkaline earth metals; organic compounds, such as mono- or polycarboxylic acids and the salts thereof, e.g. 4-tert-butylbenzoic acid, adipic acid, diphenylacetic acid, sodium succinate or sodium benzoate; polymeric compounds, such as ionic copolymers (ionomers). Especially preferred are 1,3:2,4-bis(3',4'-dimethylbenzylidene)sorbitol, 1,3:2,4-di(paramethyldibenzylidene)sorbitol, and 1,3:2,4-di(benzylidene)sorbitol.
12. Fillers and reinforcing agents, for example calcium carbonate, silicates, glass fibres, glass bulbs, asbestos, talc, kaolin, mica, barium sulfate, metal oxides and hydroxides, carbon black, graphite, wood flour and flours or fibers of other natural products, synthetic fibers.
13. Other additives, for example plasticisers, lubricants, emulsifiers, pigments, rheology additives, catalysts, flow-control agents, optical brighteners, flameproofing agents, antistatic agents and blowing agents.
14. Benzofuran-2-ones and indolinones, for example those disclosed in U.S. 4,325,863; U.S. 4,338,244; U.S. 5,175,312; U.S. 5,216,052; U.S. 5,252,643; DE-A-4316611; DE-A-4316622; DE-A-4316876; EP-A-0589839 or EP-A-0591102 or 3-[4-(2-acetoxyethoxy)-phenyl]-5,7-di-tert-butylbenzofuran-2-one, 5,7-di-tert-butyl-3-[4-(2-stearoyloxyethoxy)phenyl]-benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butylbenzofuran-2-one, 3-(3,5-dimethyl-4-pivaloyloxyphenyl)-5,7-di-tert-butylbenzofuran-2-one, 3-(3,4-dimethylphenyl)-5,7-di-tert-butylbenzofuran-2-one, 3-(2,3-dimethylphenyl)-5,7-di-tert-butylbenzofuran-2-one.

The co-stabilizers, with the exception of the benzofuran-2-ones listed under 14, are added for example in concentrations of 0.01 to 10%, relative to the total weight of the material to be stabilized.

The benzofuran-2-ones listed under 14 are added in concentrations of 0.0005 to 10%, preferably 0.001 to 5%, in particular 0.01 to 2%, relative to the total weight of the material to be stabilized.

Further preferred compositions comprise, in addition to components (a) and (b) further additives, in particular phenolic antioxidants, light stabilizers and/or processing stabilizers.

Preferred processing stabilizers are for example phosphites, phosphonites and/or benzofuran-2-ones.

Particularly preferred additives are phenolic antioxidants (item 1 of the list), sterically hindered amines (item 2.6 of the list), phosphates and phosphonites (item 4 of the list), peroxide-destroying compounds (item 5 of the list) and benzofuran-2-ones (item 14 of the list).

Incorporation of the amorphous solid form of bis(2,4-dicumylphenyl)pentaerythritol diphosphite and, if desired, further additives in the polymeric organic material is carried out by known methods, for example before or during moulding or by applying the dissolved or dispersed compounds to the polymeric organic material, if appropriate with subsequent slow evaporation of the solvent. The amorphous solid modification according to the invention can also be added to the materials to be stabilized in the form of a masterbatch containing them, for example, in a concentration of 2.5 to 25% by weight.

The amorphous solid modification according to the invention can also be added before or during polymerization or before crosslinking.

The amorphous solid modification according to the invention can be incorporated into the material to be stabilized in pure form or encapsulated in waxes, oils or polymers.

The amorphous solid modification according to the invention can also be sprayed onto the polymer to be stabilized. It is capable of diluting other additives (for example the above-mentioned customary additives) or their melts, thus enabling them to be sprayed onto the polymer to be stabilized also together with these additives. Addition by spraying during deactivation of the polymerization catalysts is particularly advantageous, it being possible, for example, for the steam used for deactivation to be used for spraying.

In the case of bead polymerized polyolefins, it may advantageous, for example, to apply the amorphous solid modification according to the invention, if desired together with other additives, by spraying.

The materials thus stabilized can be used in a wide range of forms, for example films, fibers, tapes, moulding compositions, profiles or as binders for paints, adhesives or cements.

As already mentioned, the organic materials to be protected are preferably organic, in particular synthetic, polymers. Of these, the materials being protected are particularly advantageously thermoplastic materials, in particular polyolefins. The excellent efficiency of the amorphous solid form of bis(2,4-dicumylphenyl)pentaerythritol diphosphite as processing stabilizer (thermal stabilizer) should be mentioned in particular. To this end, it is advantageously added to the polymer before or during its processing. It is however also possible to stabilize other polymers, for example elastomers, lubricants or hydraulic fluids against degradation, for example light-induced or thermal-oxidative degradation. For elastomers, see the above list of possible organic materials.

Suitable lubricants and hydraulic fluids are based, for example, on mineral or synthetic oils or mixtures thereof. Lubricants are known to one skilled in the art and described in the relevant technical literature, for example in Dieter Klamann, "Schmierstoffe und verwandte Produkte" (Verlag Chemie, Weinheim 1982), in Schewe-Kobek, "Das Schmiermittel-Taschenbuch" (Dr. Alfred Huthig-Verlag, Heidelberg, 1974) and in "Ullmanns Enryklopadie der technischen Chemie" vol. 13, pages 85 - 94 (Verlag Chemie, Weinheim, 1977).

Accordingly, a preferred embodiment of the present invention is the use of the amorphous solid form of bis(2,4-dicumylphenyl)pentaerythritol diphosphite as stabilizer for organic materials against oxidative, thermal or light-induced degradation.

The amorphous solid modification according to the invention is preferably used as process-sing stabilizer (thermal stabilizer) of thermoplastic polymers.

The present invention also provides a process for stabilizing an organic material against oxidative, thermal or light-induced degradation, which comprises incorporating therein or applying thereto the amorphous solid form of bis(2,4-dicumylphenyl)pentaerythritol diphosphite.

The instant amorphous solid form of of bis(2,4-dicumylphenyl)pentaerythritol diphosphite shows a faster rate of dissolving and better solubility in organic materials, such as in polymers and in lubricants, as compared to the prior art crystalline form. This provides better compatibility and more uniform distribution of the instant amorphous solid form of of bis(2,4-dicumylphenyl)pentaerythritol diphosphite with an organic polymer during formulation compared to the prior art compound melting at 230 - 232°C.

Differential scanning calorimetry (DSC) measurements are obtained on a Mettler DSC 820 with aligned aluminum pan and temperature scan at +10°C per minute till 300°C.

X-ray diffraction patterns are recorded on a Philips Norelco X-ray Diffractometer unit, using Cu-Kα radiation with a nickel filter.

The following Examples illustrate the invention further. Parts or percentages relate to weight.

### Example 1: Preparation of the amorphous solid form of bis(2,4-dicumylphenyl)pentaerythritol diphosphite.

The compound of the formula I, bis(2,4-dicumylphenyl)pentaerythritol diphosphite, is prepared according to procedure of Example 3 of U.S. Patent 5,438,086. The crystalline compound with a melting point 230 - 232°C is heated to 250°C until a clear melt is obtained. The melt is cooled rapidly by pouring the molten material onto a cool surface maintained at 20°C to yield an amorphous solid with a Tg (DSC) of 61°C (measured at a standard heating rate of +10°C per minute). The clear transparent solid is conveniently ground into a white powder using a mortar and pestle. The X-ray diffraction pattern obtained using Cu-Kα is featureless.

### Example 2: Preparation of the amorphous blend (1 : 1) of bis(2,4-dicumylphenyl)pentaerythritol diphosphite and lrgafos 168® .

In analogy to Example 1, a 1 : 1 mixture of crystalline bis(2,4-dicumylphenyl)pentaerythritol diphosphite and Irgafos 168® (tris(2,4-di-tert-butylphenyl) phosphite; Ciba Specialty Chemicals Inc.] is heated to 250°C until a clear melt is obtained. The melt is cooled rapidly by pouring the molten material onto a cool surface maintained at 20°C to yield an amorphous 1 : 1 blend with a Tg (DSC) of 54°C (measured at a standard heating rate of +10°C per minute).

### Example 3: Preparation of the amorphous blend (1 : 1) of bis(2,4-dicumylphenyl)pentaerythritol diphosphite and Irgafos 12® .

In analogy to Example 1, a 1 : 1 mixture of crystalline bis(2,4-dicumylphenyl)pentaerythritol diphosphite and Irgafos 12® [2,2',2"-nitrilo[triethyltris(3,3',5,5'-tetra-tert-butyl-1,1'-biphenyl-2,2'-diyl)phosphite; Ciba Specialty Chemicals Inc.] is heated to 250°C until a clear melt is obtained. The melt is cooled rapidly by pouring the molten material onto a cool surface maintained at 25°C to yield an amorphous 1 : 1 blend with a T₉ (DSC) of 73°C (measured at a standard heating rate of +10°C per minute).

### Example 4: Preparation of the amorphous blend (1 : 1) of bis(2,4-dicumylphenyl)pentaerythritol diphosphite and Irgafos P-EPQ® .

In analogy to Example 1, a 1 : 1 mixture of crystalline bis(2,4-dicumylphenyl)pentaerythritol diphosphite and Irgafos P-EPQ® [tetrakis(2,4-di-tert-butylphenyl) 4,4'-biphenylene diphosphonite; Ciba Specialty Chemicals Inc.] is heated to 250°C until a clear melt is obtained. The melt is cooled rapidly by pouring the molten material onto a cool surface maintained at 20°C to yield an amorphous 1 : 1 blend with a T_{g} (DSC) of 63°C (measured at a standard heating rate of +10°C per minute).

### Example 5: Preparation of the amorphous blend (1 : 1) of bis(2,4-dicumylphenyl)pentaerythritol diphosphite and lrganox 1010® .

In analogy to Example 1, a 1 : 1 mixture of crystalline bis(2,4-dicumylphenyl)pentaerythritol diphosphite and Irganox 1010® (pentaerythritol tetrakis[3-(3,5-di-tert-butyl-4-hydroxyphenyl)-propionate]; Ciba Specialty Chemicals Inc.) is heated to 250°C until a clear melt is obtained. The melt is cooled rapidly by pouring the molten material onto a cool surface maintained at 20°C to yield an amorphous 1 : 1 blend with a T_{g} (DSC) of 53 - 55°C (measured at a standard heating rate of +10°C per minute).

### Example 6: Preparation of the amorphous blend (6 : 1 : 3) of bis(2,4-dicumylphenyl)pentaerythritol diphosphite, Irganox HP 136® and lrganox 1010® .

In analogy to Example 1, a 6 : 1 : 3 mixture of crystalline bis(2,4-dicumylphenyl)pentaerythritol diphosphite, lrganox HP 136® (structure see footnote f at end of Table 2; Ciba Specialty Chemicals Inc.) and Irganox 1010® (pentaerythritol tetrakis[3-(3,5-di-tert-butyl-4-hydroxyphenyl)propionate]; Ciba Specialty Chemicals Inc.) is heated to 250°C until a clear melt is obtained. The melt is cooled rapidly by pouring the molten material onto a cool surface maintained at 20°C to yield an amorphous 6 : 1 : 3 blend with a T₉ (DSC) of 50°C (measured at a standard heating rate of +10°C per minute).

### Example 7: Stabilization of multiple-extruded polypropylene homopolymer.

3 kg of a polypropylene homopolymer (PH 350) is dry-blended with 0.05 % calcium stearate and the additives according to Table 1. This blend is then extruded in a twin-screw extruder of Berstorff (RTM) (ZSK 25, UD=46) at temperatures of at most 240°C. The extrudate is cooled by drawing it through a water bath and then granulated. This granulate is repeatedly extruded. After 3 extrusions, the melt flow index (MFI) and Yellowness Index (YI) is measured.

The change of the molecular weight is reported in terms of the melt flow index (MFI) according to the ASTM-D-1238-70, measured in a Göttfert melt flow indexer and loads as given below. Experiment errors of the MFI measurements are found to be ± 0.03 for the MFI measured at 190°C and 2.16 kg load, ± 0.06 for the MFI measured at 190°C and 5 kg load and ± 0.1 for the MFI measured at 190°C and 10 kg load. A substantial decrease in the melt index denotes poor stabilization. The color quality is reported in terms of Yellowness Index (YI) determined on the granules in accordance with the ASTM 1926-70 Yellowness Test. Low YI values denot little discoloration, high YI values severe discoloration of the samples. The results are summarized in Table 1.

**Table 1:**

| Example | Additive | YI after 1 extr. | YI after 3 extr | MFI after 1 extr. | MFI after 3 extr. |
|---|---|---|---|---|---|
| | 0.050 % Irganox 1010®^{c)} | | | | |
| Example 7a^{a)} | 0.025 % Irgafos 168®^{d)} | -1.16 | 2.01 | 3.67 | 5.83 |
| | 0.025 % Doverphos S 9228T®^{(e)} | | | | |
| Example 7b^{b)} | 0.050 % Irganox 1010®^{c)} | 1.16 | 1.62 | 3.60 | 5.27 |
| | 0.050 % Compound of Example 2 | | | | |

| | | | | | |
|---|---|---|---|---|---|
| a) Comparative Example. | | | | | |
| b) Example according to the invention. | | | | | |
| c) Irganox 1010® (Ciba Specialty Chemicals Inc.) is a compound of the formula AO-1 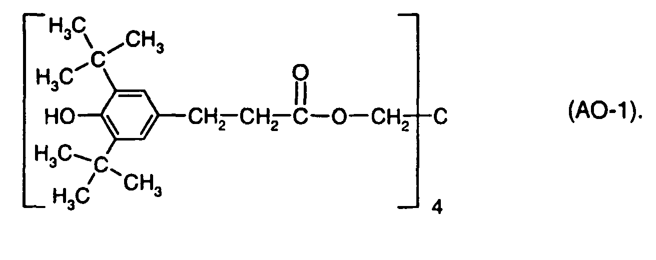 | | | | | |
| d) Irgafos 168® (Ciba Specialty Chemicals Inc.) is tris(2,4-di-tert-butylphenyl) phosphite. | | | | | |
| e) Doverphos S 9228T® is the crystalline form of bis(2,4-dicumylphenyl)pentaerythritol diphosphite prepared according to procedure of Example 3 of U.S. Patent 5,438,086 (melting point 230 - 232°C). | | | | | |

### Example 8: Stabilization of multiple-extruded polypropylene homopolymer.

3 kg of a polypropylene homopolymer (PH 350) is dry-blended with 0.05 % calcium stearate and the additives according to Table 2. This blend is then extruded in a twin-screw extruder of Berstorff (RTM) (ZSK 25, UD=46) at temperatures of at most 240°C. The extrudate is cooled by drawing it through a water bath and then granulated. This granulate is repeatedly extruded. After 3 extrusions, the melt flow index (MFI) and Yellowness Index (YI) is measured in analogy to Example 7. The results are summarized in Table 2.

**Table 2:**

| Example | Additive | YI after 1 extr. | YI after 3 extr. | MFI after 1 extr. | MFI after 3 extr. |
|---|---|---|---|---|---|
| Example 8a^{a)} | 0.030 % Irganox 1010®^{c)} | | | | |
| | 0.010 % Irganox HP 136®^{f)} | -1.75 | 0.94 | 3.35 | 4.44 |
| | 0.060 % Doverphos S 9228T®^{(e)} | | | | |
| Example 8b^{b)} | 0.100 % Compound of Example 6 | -1.98 | -0.70 | 3.47 | 5.37 |

| | | | | | |
|---|---|---|---|---|---|
| See end of Table 1 for explanation of footnotes a), b), c) and e). | | | | | |
| f) lrganox HP-136® (Ciba Specialty Chemicals Inc.) and is a mixture of about 85 parts by weight of the compound of formula Va and about 15 parts by weight of the compound of formula Vb. 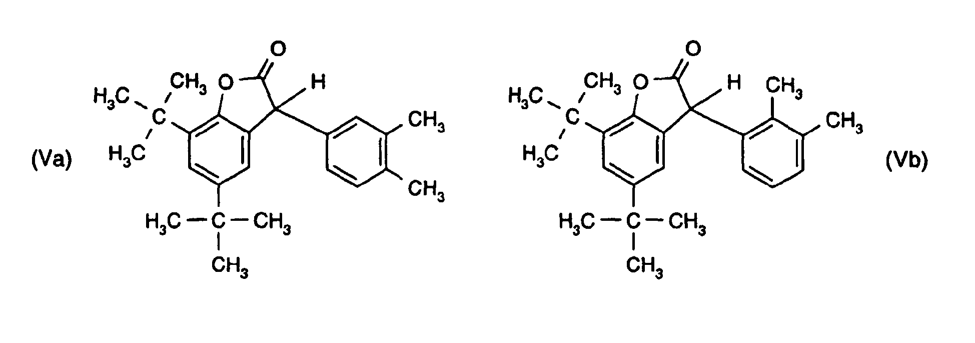 | | | | | |

## Claims

1. The amorphous solid form of bis(2,4-dicumylphenyl)pentaerythritol diphosphite, **characterized by** melting in the range of 59 - 63°C and by an X-ray diffraction pattern which is featureless.

2. A process for the preparation of the amorphous solid form of bis(2,4-dicumytphenyl)pentaerythritol diphosphite which comprises melting said compound and rapidly cooling the melt.

3. A process according to claim 2 which comprises pouring the molten material onto a cool surface maintained below 30°C.

4. A process according to claim 3 wherein the cool surface is near 20°C.

5. The amorphous solid form of bis(2,4-dicumylphenyl)pentaerythritol diphosphite obtainable by the process of claim 2.

6. A composition comprising
a) an organic material subject to oxidative, thermal or light-induced degradation, and
b) the amorphous solid form of bis(2,4-dicumylphenyl)pentaerythritol diphosphite according to claim 1.

7. A composition according to claim 6, comprising in addition, besides components (a) and (b), further additives.

8. A composition according to claim 7, comprising as further additives, phenolic antioxidants, light stabilizers and/or processing stabilizers.

9. A composition according to claim 8, comprising as processing stabilizers, phosphites, phosphonites and/or benzofuran-2-ones.

10. A composition according to claim 6, comprising as component (a), natural, semi-synthetic or synthetic polymers.

11. A composition according to claim 6, comprising as component (a), thermoplastic polymers.

12. A composition according to claim 6, comprising as component (a), a polyolefin.

13. A composition according to claim 6, comprising as component (a), polyethylene or polypropylene.

14. A process for stabilizing an organic material against oxidative, thermal or light-induced degradation, which comprises incorporating therein or applying thereto the amorphous solid form of bis(2,4-dicumylphenyl)pentaerythritol diphosphite as defined in claim 1.

15. Use of the amorphous solid form of bis(2,4-dicumylphenyl)pentaerythritol diphosphite as defined in claim 1, as stabilizer for organic materials against oxidative, thermal or light-induced degradation.

## Patentansprüche

1. Amorphe, feste Form von Bis(2,4-dicumylphenyl)pentaerythritdiphosphit, **gekennzeichnet durch** Schmelzen im Bereich von 59 - 63°C und **durch** ein merkmalsloses Röntgenbeugungsmuster.

2. Verfahren zur Herstellung der amorphen, festen Form von Bis(2,4-dicumylphenyl)pentaerythritdiphosphit, das Schmelzen der Verbindung und schnelles Kühlen der Schmelze umfasst.

3. Verfahren nach Anspruch 2, das Gießen des geschmolzenen Materials auf eine kalte Oberfläche, die unter 30°C gehalten wird, umfasst.

4. Verfahren nach Anspruch 3, wobei die kalte Oberfläche nahe 20°C ist.

5. Amorphe, feste Form von Bis(2,4-dicumylphenyl)pentaerythritdiphosphit, die durch das Verfahren von Anspruch 2 erhältlich ist.

6. Zusammensetzung, umfassend:
a) ein organisches Material, das oxidativem, thermischem oder durch Licht induziertem Abbau unterliegt, und
b) die amorphe, feste Form von Bis(2,4-dicumylphenyl)-pentaerythritdiphosphit nach Anspruch 1.

7. Zusammensetzung nach Anspruch 6, umfassend die Zugabe von weiteren Additiven neben Komponenten (a) und (b).

8. Zusammensetzung nach Anspruch 7, umfassend als weitere Additive phenolische Antioxidantien, Lichtstabilisatoren und/oder Verarbeitungsstabilisatoren.

9. Zusammensetzung nach Anspruch 8, umfassend - als Verarbeitungsstabilisatoren - Phosphite, Phosphonite und/oder Benzofuran-2-one.

10. Zusammensetzung nach Anspruch 6, umfassend als Komponente (a) natürliche, halbsynthetische oder synthetische Polymere.

11. Zusammensetzung nach Anspruch 6, umfassend als Komponente (a) thermoplastische Polymere.

12. Zusammensetzung nach Anspruch 6, umfassend als Komponente (a) ein Polyolefin.

13. Zusammensetzung nach Anspruch 6, umfassend als Komponente (a) Polyethylen oder Polypropylen.

14. Verfahren zum Stabilisieren eines organischen Materials gegen oxidativen, thermischen oder durch Licht induzierten Abbau, das Einarbeiten der wie in Anspruch 1 definierten, amorphen, festen Form von Bis (2,4-dicumylphenyl)pentaerythritdiphosphit darin oder Auftragen derselben darauf umfasst.

15. Verwendung der wie in Anspruch 1 definierten amorphen, festen Form von Bis(2,4-dicumylphenyl)pentaerythritdiphosphit als Stabilisator für organische Materialien gegen oxidativen, thermischen oder durch Licht induzierten Abbau.

## Revendications

1. Forme solide amorphe du bis(2,4-dicumylphényl)pentaérythritol-diphosphite,
**caractérisée par** une fusion dans la gamme de 59 à 63 °C et par une figure de diffraction aux rayons X qui est sans caractéristiques.

2. Procédé pour la préparation de la forme solide amorphe du bis(2,4-dicumylphényl)pentaérythritol-diphosphite qui comprend la fusion dudit composé et un refroidissement rapide de la matière fondue.

3. Procédé selon la revendication 2 qui comprend le versement de la matière fondue sur une surface froide maintenue au-dessous de 30 °C.

4. Procédé selon la revendication 3 dans lequel la surface froide est proche de 20 °C.

5. Forme solide amorphe du bis(2,4-dicumylphényl)pentaérythritol-diphosphite pouvant être obtenue par le procédé selon la revendication 2.

6. Composition comprenant
a) un matériau organique sujet à dégradation par oxydation, thermique ou photo-induite, et
b) la forme solide amorphe du bis(2,4-dicumylphényl)pentaérythritol-diphosphite selon la revendication 1.

7. Composition selon la revendication 6, comprenant en outre, en plus des composants (a) et (b), d'autres additifs.

8. Composition selon la revendication 7, comprenant comme autres additifs, des anti-oxydants phénoliques, des photostabilisateurs et/ou des stabilisateurs de transformation.

9. Composition selon la revendication 8, comprenant comme stabilisateurs de transformation, des phosphites, des phosphonites et/ou des benzofuran-2-ones.

10. Composition selon la revendication 6, comprenant comme composants (a), des polymères naturels, semi-synthétiques ou synthétiques.

11. Composition selon la revendication 6, comprenant comme composants (a) des polymères thermoplastiques.

12. Composition selon la revendication 6, comprenant comme composants (a) une polyoléfine.

13. Composition selon la revendication 6, comprenant comme composants (a) le polyéthylène ou le polypropylène.

14. Procédé de stabilisation d'un matériau organique contre une dégradation par oxydation, thermique ou photo-induite, qui comprend l'incorporation ou l'application à celui-ci de la forme solide amorphe du bis (2,4-dicumylphényl)pentaérythritol-diphosphite telle que définie à la revendication 1.

15. Utilisation de la forme solide amorphe du bis(2,4-dicumylphényl)pentaérythritol-diphosphite telle que définie à la revendication 1, comme stabilisateur pour des matériaux organiques contre la dégradation par oxydation, thermique ou photo-induite.
